# EUROPEAN PATENT SPECIFICATION

(11) **EP 2 670 039 B1**
(45) Date of publication and mention of the grant of the patent: **10.11.2021**
(21) Application number: 12739642.2
(22) Date of filing: 21.01.2012
(51) Int. Cl.: H02M 3/337, H02M 3/338, H02M 3/28

(54) **QUASI RESONANT PUSH-PULL CONVERTER AND CONTROL METHOD THEREOF**
QUASIRESONANTER GEGENTAKTWANDLER UND STEUERVERFAHREN DAFÜR
CONVERTISSEUR SYMÉTRIQUE QUASI-RÉSONNANT ET SON PROCÉDÉ DE COMMANDE

(30) Priority: 28.01.2011 CN 201110030967
(43) Date of publication of application: 04.12.2013
(73) Proprietor: Lian Zheng Electronic (Shenzhen) Co., Ltd., Guangdong 518101 (CN)
(72) Inventor: HE, Zhifeng, Taipei (TW); YANG, Yucheng, Taipei (TW)
(74) Representative: BRP Renaud & Partner mbB Rechtsanwälte Patentanwälte Steuerberater
(86) International application number: PCT/CN2012/070699
(87) International publication number: WO 2012/100740

(56) References cited:
- CN-A- 1 352 482
- CN-A- 101 588 135
- CN-A- 101 588 139
- US-A- 6 011 704
- US-A1- 2009 290 385
- US-B1- 6 320 764
- None

## Description

### FIELD OF THE INVENTION

The inventive subject matter relates to the field of power electronics technology, and more particularly, relates to a quasi-resonant push-pull converters and methods of operating the same.

### BACKGROUND

Electronic products have become smaller and lighter, with greater requirements for efficiency and electromagnetic compatibility. In a typical power electronics device, components such as inductors, capacitors and transformers account for a large proportion of the size and weight of the device, so reducing the size and weight of those components is desirable. Increasing switching frequency can improve cut-off frequency of a filter, and thus comparatively smaller inductors and capacitors can be used, thus reducing the size and weight of a filter. Increasing switching frequency can also reduce the size and weight of transformers.

However, when switching frequency is increased, switching losses may increase and problems with inductive turn-off, capacitive turn-on and diode reverse recovery may be aggravated. These factors may reduce circuit efficiency and increase electromagnetic interference. Soft switching technology has been used to address these issues, and can reduce switching losses and electromagnetic interference (EMI) caused by hard switching. Soft switching technology includes zero voltage switching (ZVS) and zero current switching (ZCS).

Soft switching configurations used in DC-DC converters include resonant converters, quasi resonant converters, multiple resonant converters, zero switching pulse width modulated (PWM) converters, zero transition PWM converters and the like. A resonant converter may be viewed as a DC switching power supply loading a resonant converter, e.g., by adding resonant elements to a standard PWM Converter. Resonant converters can be categorized as series resonant converters and parallel resonant converters in terms of resonant modes of resonant elements, and can be categorized into series load resonant converters and parallel load resonant converters in terms of the connections between loads and resonant circuits. A working principle of load resonant converters is that the current or voltage flowing through a switching element is transformed to a sinusoidal waveform through the resonance of resonant elements with loads. Switching elements are closed or opened at the zero-crossing of current or voltage to achieve soft switching.

A quasi resonant converter operates in resonance only for a part of a switching period. A quasi resonant converter may enable the current or voltage in a switching element to vary quasi-sinusoidally through resonance to create a switching condition of zero current or zero voltage, which may reduce switching losses and switching noise.

A multiple resonant converter has multiple resonant components in the circuit and typically achieves zero voltage switching using frequency control. A zero voltage switching multiple resonant converter is usually used because it absorbs junction capacitance of a switching device (e.g., a transistor) and a rectifier diode and achieves zero voltage switching of a switching device and a rectifier diode.

PWM converters include zero voltage switching PWM converters and zero current switching PWM converters, which achieve PWM control by adding an auxiliary switching device on the basis of a quasi resonant soft switch to control resonant process of resonant elements. Because resonance is used for phase commutation and PWM working mode is still used after the phase commutation, problems with hard switching PWM may be overcome.

Zero transition PWM converters include ZVS-PWM converters and ZCS-PWM converters. Such converters typically combine a quasi resonant converter with a conventional PWM converter, interrupting a resonant process by using an additional auxiliary active switch, causing the circuit to operate in ZCS or ZVS quasi-resonant mode part of the time and to operate in PWM mode part of the time. Such converters have characteristics of a soft switch and characteristics of PWM constant frequency duty ratio adjustment.

In typical ZVS-PWM converters and ZCS-PWM converters, a resonant inductor is cascaded in a main power return circuit, so there is a lot circulating energy in the circuit, which may increase losses. In addition, inductive energy storage is related to input voltage and output load, which makes the soft switching condition of the circuit largely depend on the changes of the input power supply and output load.

Soft switching technology may enable a power electronics converter to have greater efficiency, greater power density and greater reliability. Soft switching technology can also reduce electromagnetic and environmental pollution, aiding in the development of green power electronics products.

Attention is drawn to US 2009 290385 A, which discloses an AC-to-DC power converter configured to provide power factor correction and a single isolated low-voltage output. The power converter includes a single-stage resonant power converter including an isolation transformer, a resonant tank, a rectifier, and a bulk storage capacitor coupled to an output of the isolation transformer. In typical applications, at least one non-isolated power converter is coupled to the output of the single-stage isolated power factor correction converter.

US 6 011 704 A discloses an autoranging power supply apparatus which may comprise a power output section having a plurality of pairs of output terminals, each of which has a maximum voltage and current rating. A switching network associated with the power output section connects and disconnects the plurality of pairs of output terminals to the external load. A control system connected to the switching network operates the switching network in response to changes in the impedance of the external load to connect and disconnect to the external load selected ones of the plurality of pairs of output terminals of the power output section to compensate for impedance variations in the external load and to prevent from being exceeded the maximum voltage and current ratings for each of the plurality of pairs of output terminals.

### SUMMARY

In accordance with the present invention, a quasi-resonant push-pull converter and a method of operating a quasi-resonant push-pull converter are defined in the appended claims. Further embodiments are inter alia disclosed in the dependent claims. In particular, the invention provides a quasi-resonant push-pull converter including a transformer having a primary winding and a secondary winding and an input circuit configured to apply a DC power source to the primary winding of the transformer. The converter further includes a resonant circuit, a rectifier circuit having an input coupled to the secondary winding and an output coupled to the resonant circuit, and a switching circuit configured to modify a coupling of the rectifier circuit responsive to a voltage of the DC power source. In some embodiments, the switching circuit is configured to change a turns ratio applied to the rectifier circuit to control an efficiency of the converter.

In some embodiments, the rectifier circuit includes a first rectifier circuit having an input coupled to first and second terminals of the secondary winding and an output coupled to an input of the filter circuit and a second rectifier circuit having an input coupled to third and fourth terminals of the secondary winding. The switching circuit is configured to couple and decouple an output of the second rectifier circuit to and from an output of the second rectifier circuit. For example, the switching circuit may include first and second switches configured to couple and decouple the output of second rectifier circuit to and from the output of the first rectifier circuit. The first and second rectifier circuits may be full-bridge rectifier circuits.

Further embodiments provide methods of operating a quasi-resonant push-pull converter including an input circuit configured to apply a DC power source to a primary winding of a transformer, a rectifier circuit coupled to a secondary winding of the transformer and an output filter coupled to an output of the rectifier circuit. The methods include selectively modifying a coupling of the rectifier circuit responsive to a voltage of the DC power source to control an efficiency of the converter. Selectively modifying a coupling of the rectifier circuit responsive to a voltage of the DC power source to control an efficiency of the converter may include changing a turns ratio applied to rectifier circuit. Selectively modifying a coupling of the rectifier circuit responsive to a voltage of the DC power source to control an efficiency of the converter may include selectively modifying a coupling of the rectifier circuit responsive to a voltage of the DC power source to maintain resonant mode operation of a switching device of the input circuit as the voltage of the DC source changes.

### BRIEF DESCRIPTION OF THE DRAWINGS

Fig. 1 is a diagram illustrating a conventional push-pull converter;
Fig. 2 is a diagram illustrating a conventional quasi-resonant push-pull converter with transformer leakage inductance;
Fig. 3 is a waveform diagram illustrating losses of transistors of a conventional quasi-resonant push-pull converter in a hard switching mode and a resonant mode;
Fig. 4 is a graph illustrating power transient efficiency of the converters of Fig. 1 and Fig. 2 under different input voltages;
Fig. 5 is a diagram illustrating a quasi-resonant push-pull converter in accordance with some embodiments of the invention; and
Fig. 6 is a graph illustrating power transient efficiency of the converters of Fig. 1, Fig. 2 and Fig. 5 under different input voltages.

### DETAILED DESCRIPTION

Specific exemplary embodiments of the inventive subject matter now will be described with reference to the accompanying drawings. In the drawings, like numbers refer to like elements. It will be understood that when an element is referred to as being "connected" or "coupled" to another element, it can be directly connected or coupled to the other element or intervening elements may be present. As used herein the term "and/or" includes any and all combinations of one or more of the associated listed items.

As used herein, the singular forms "a", "an" and "the" are intended to include the plural forms as well, unless expressly stated otherwise. It will be further understood that the terms "includes," "comprises," "including" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this inventive subject matter belongs. It will be further understood that terms, such as those defined in commonly used dictionaries, should be interpreted as having a meaning that is consistent with their meaning in the context of the specification and the relevant art.

A push-pull converter typically has a simple structure and conveys energy by the alternating operation of two switching devices that bidirectionally excite a transformer of the converter. A push-pull converter may transfer a great amount of large power and may have a high utilization ratio. Typically, this is only a voltage drop of one switching device in the input return circuit at work, so comparatively small conduction losses may occur. Therefore, push-pull converters may be especially suited for application in low input voltage power supply systems.

However, push-pull converters may have a significant problem with magnetic bias, so it is desirable that the circuit have a good symmetry to limit DC magnetic bias that may result in saturation of the magnetic core. Theoretically, a switching device used in a converter is sized to bear twice the amount of input voltage, but due to the existence of leakage inductance, the voltage peak may be bigger than that when the switching device is turned off. To address this problem, the transformer windings may be closely coupled to reduce leakage inductance. The voltage rating of the switching device may also be increased.

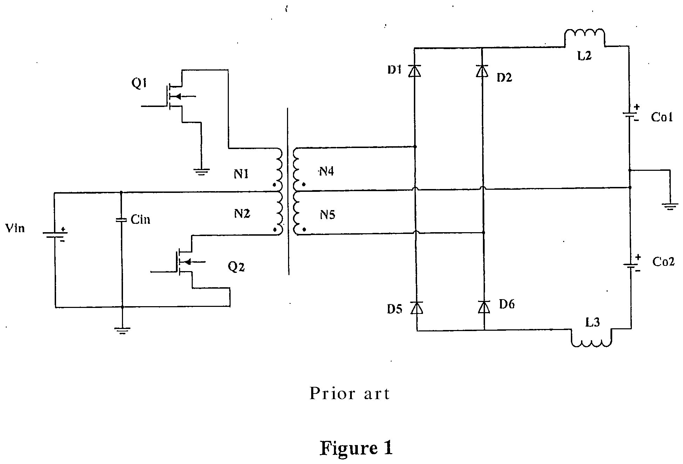

Fig. 1 illustrates a conventional push-pull converter. The primary side of the push-pull converter comprises a DC input power supply, MOSFET switching devices Q1 and Q2, an input capacitor Cin and portions N1 and N2 of a primary winding of a transformer. The positive terminal of the DC input power supply is connected to the source terminal of the MOSFET switching device Q1 via the primary winding portion N1 and the drain terminal of the MOSFET switching device Q1 is grounded. The positive terminal of the DC input power supply is connected to the source terminal of the MOSFET switching device Q2 via the primary winding portion N2 and the drain terminal of the MOSFET switching device Q2 is grounded. The input capacitor Cin is paralleled with the DC input power supply, with one terminal connected to the dotted terminal of the primary winding portion N1 and the other terminal connected to ground.

The secondary side of a push-pull converter comprises secondary winding of the transformer with portions N4 and N5, a full-bridge rectifier, inductors L2 and L3, output capacitors Co1 and Co2. The full-bridge rectifier comprises diodes D1, D2, D5 and D6. The dotted terminal of the secondary winding portion N4 and the undotted terminal of the secondary winding portion N5 are grounded. The undotted terminal of the secondary winding portion N4 is connected to the anode of the diode D1 and the cathode of the diode D5. The dotted terminal of the secondary winding portion N5 is connected to the anode of the diode D2 and the cathode of the diode D6. The cathode of the diode D1 is connected to the cathode of the diode D2 and one terminal of the inductor L2. The other terminal of the inductor L2 is connected to the positive terminal of the output capacitor Co1. The negative terminal of the output capacitor Co1 is grounded. The anode of the diode D5 is connected to the anode of the diode D6 and one terminal of the inductor L3. The other terminal of the inductor L3 is connected to the negative terminal of the output capacitor Co2. The positive terminal of the output capacitor Co2 is grounded.

Operation of the circuit of Fig. 1 is as follows. In a first period, MOSFET switching device Q1 is closed and current flows through the primary winding portion N1 and MOSFET switching device Q1. On the secondary side, current flows from the undotted terminal of the secondary winding portion N4 to the dotted terminal of the secondary winding portion N4 via the output capacitor Co2, the inductor L3 and the diode D5. Current also flows from the undotted terminal of the secondary winding portion N5 to the dotted terminal of the secondary winding portion N5 and to the output capacitor Co1 via the diode D2 and the inductor L2.

In a second period, MOSFET switching device Q2 is closed and current flows through the primary winding portion N2 and MOSFET switching device Q2. Accordingly, in the secondary side, current flows from the dotted terminal of the secondary winding portion N5 to its other terminal via the output capacitor Co2, the inductor L3 and the diode D6. Current also flows from the dotted terminal of the secondary winding portion N4 to its other terminal, and to the output capacitor Co1 via the diode D1 and the inductor L2.

A push-pull converter is relatively easy to control and may have a relatively low cost. However, when the input power is high, it may not provide high efficiency. Switching losses of power switching devices Q1 and Q2 may become significant, particularly at higher frequencies and power densities. To address these problems, the invention provides a quasi-resonant push-pull converter that reduces switching losses of the switching devices. Such converters may be economical and may provide high power density, high efficiency and high power capability.

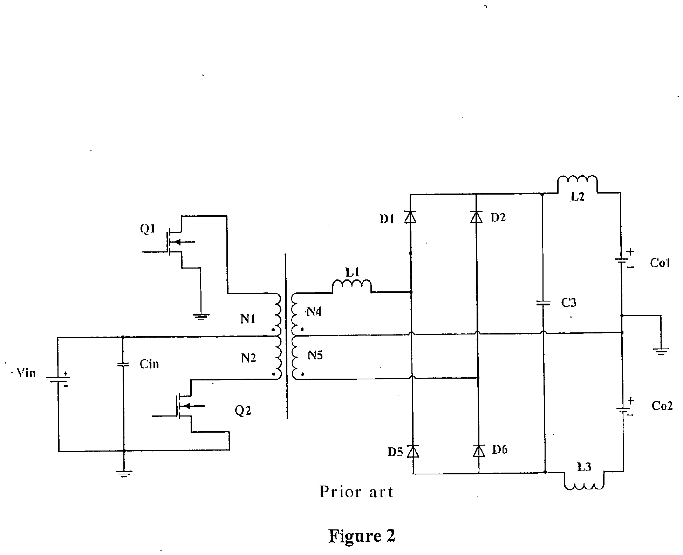

Fig. 2 illustrates a quasi-resonant push-pull converter similar to Fig. 1 but having a significant leakage inductance associated with the transformer. The primary side of a push-pull converter comprises a DC input power supply, MOSFET switching devices Q1 and Q2, an input capacitor Cin and a primary winding of a transformer with portions N1 and N2. The positive terminal of the DC input power supply is connected to the source terminal of the MOSFET switching device Q1 via the primary winding portion N1 and the drain terminal of the MOSFET switching device Q1 is grounded. The positive terminal of the DC input power supply is connected to the source terminal of the MOSFET switching device Q2 via the primary winding portion N2 and the drain terminal of the MOSFET switching device Q2 is grounded. The input capacitor Cin is paralleled with the DC input power supply, with one terminal connected to the dotted terminal of the primary winding portion N1 and the other terminal connected to ground.

The secondary side of the push-pull converter comprises a secondary winding of the transformer with portions N4 and N5, a transformer equivalent leakage inductor L1, a full-bridge rectifier, a resonant capacitor C3, inductors L2 and L3 and output capacitors Co1. The full-bridge rectifier comprises diodes D1, D2, D5 and D6. The dotted terminal of the secondary winding portion N4 and the undotted terminal of the secondary winding portion N5 are grounded. The undotted terminal of the secondary winding portion N4 is connected to one terminal of the transformer equivalent leakage inductor L1, while the other terminal of the transformer equivalent leakage inductor L1 is connected to the anode of the diode D2 and the cathode of the diode D5. The dotted terminal of the secondary winding portion N5 is connected to the anode of the diode D2 and the cathode of the diode D6. The cathode of the diode D1 is connected to the cathode of the diode D2, the resonant capacitor C3 and one terminal of the inductor L2, while the other terminal of the inductor L2 is connected to the positive terminal of the output capacitor Co1.The negative terminal of the output capacitor Co1 is grounded. The anode of the diode D5 is connected to the anode of the diode D6, the other terminal of the resonant capacitor C3 and one terminal of the inductor L3. The other terminal of the inductor L3 is connected to the negative terminal of the output capacitor Co2. The positive terminal of the output capacitor Co2 is grounded.

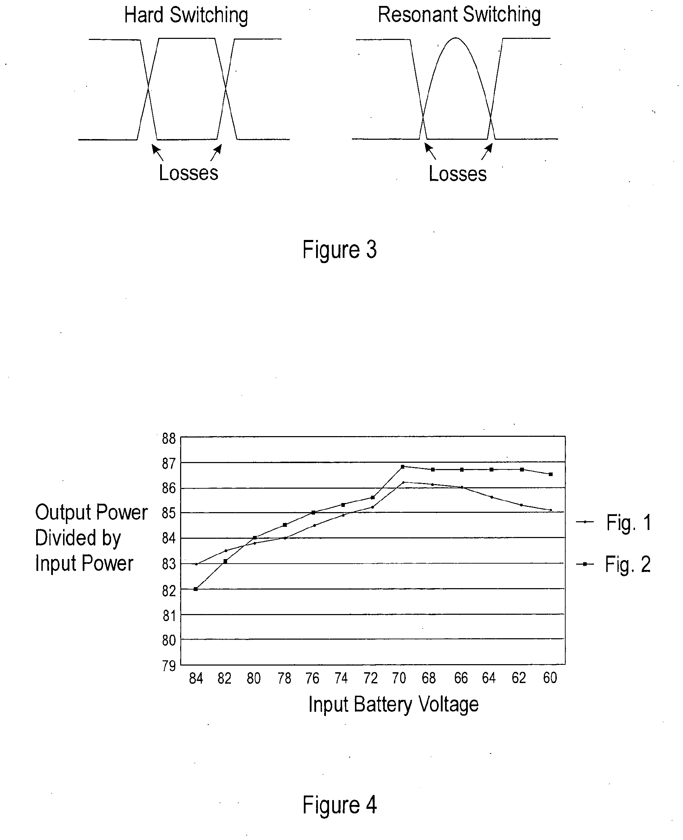

Fig. 3 illustrates losses of Q1 and Q2 of the converter of Fig. 2 in a hard switching mode and a resonant mode. It is apparent that the losses of MOSFET switching devices Q1 and Q2 in the hard switching mode are greater than those in the resonant mode.

When the input DC power supply is a battery, the converter may operate for a significant time with a low input voltage. The resonant circuit of the converter may be optimized for a low voltage input in order to maintain a desired overall discharging efficiency. However, the resonant circuit may not meet the requirements for a high voltage of the battery, such that the converter may not maintain the best resonant effect. When the input voltage of the battery is comparatively high, duty becomes smaller and resonance may become ineffective. Thus the switches Q1 and Q2 may enter hard switching mode, and significant switching losses may occur.

Fig. 4 is graph comparing efficiency of the converters of Fig. 1 and Fig. 2 under different input voltages. The X-axis in Fig. 4 represents the input battery voltage, decreasing from about 80 volts to about 60 volts from left to right. The Y-axis represents the efficiency (i.e., the ratio of the output power to the input power) expressed as a percentage. The rectangle point line represents the efficiency of the circuit of Fig. 2 at different input voltages, and the rhombohedral point line represents the efficiency of the circuit of Fig. 1 at different input voltages.

As shown by Fig. 4, when the input battery voltage is between about 84 volts and about 70 volts, the efficiency of the circuits of Fig. 1 and Fig. 2 increases as the input battery voltage decreases. When the input battery voltage is between about 70 volts and about 60 volts, the efficiency of the circuit of Fig. 1 decreases as the input battery voltage decreases. When the input battery voltage is between about 68 volts and about 62 volts, the efficiency of the circuit of Fig. 2 remains substantially the same.

The efficiency of both circuits is maximized when the input battery voltage is about 70 volts. The efficiency is minimized for both circuits when the input battery voltage is about 84 volts. When the input battery voltage is 84 volts and 82 volts, the efficiency of the circuit of Fig. 1 is greater than that of the circuit of Fig. 2, whereas at all the other points, the efficiency of the circuit of Fig. 1 is less than that of the circuit of Fig. 2.

Therefore, in most cases, the efficiency of the quasi-resonant push-pull converter of Fig. 1 is greater than that of the push-pull converter of Fig. 2. When the battery voltage is high, such as in the interval between about 70 volts and about 84 volts, the efficiency of the quasi-resonant push-pull converter is not particularly high.

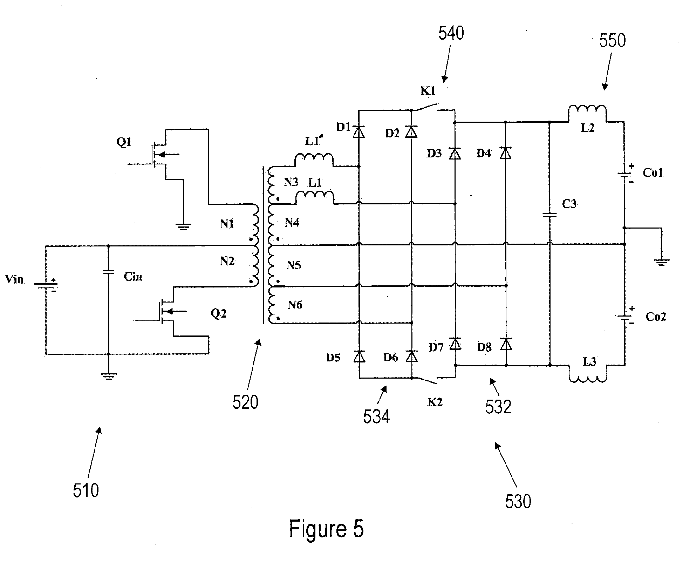

Fig. 5 illustrates a quasi-resonant push-pull converter in accordance with the invention. The primary side of the push-pull converter comprises an input circuit 510 configured to be coupled to a DC power source and including MOSFET switching devices Q1 and Q2 and an input capacitor Cin. The input circuit 510 is configured to selectively couple the DC power source to the primary winding of a transformer 520 having primary winding portions N1 and N2. The positive terminal of the DC input power supply is connected to the source terminal of the MOSFET switching device Q1 via the primary winding portion N1 and the drain terminal of the MOSFET switching device Q1 is grounded. The positive terminal of the DC input power supply is connected to the source terminal of the MOSFET switching device Q2 via the primary winding portion N2 and the drain terminal of the MOSFET switching device Q2 is grounded. The input capacitor Cin is paralleled with the DC input power supply, with one terminal connected to the dotted terminal of the primary winding portion N1 and the other terminal connected to ground.

The secondary side of the push-pull converter comprises a secondary winding of the transformer 520 with secondary winding portions N3, N4, N5 and N6, and a rectifier circuit 530 including a first full-bridge rectifier circuit 532 and a second full-bridge rectifier circuit 534. A switching circuit 540 includes a first switch K1 and a second switch K2 configured to selectively couple the outputs of the first rectifier circuit 532 and the second rectifier circuit 534. A resonant circuit 550 is coupled to an output of the first rectifier circuit 532 and includes a resonant capacitor C3, inductors L2 and L3 and output capacitors Co1 and Co2. The second full-bridge rectifier circuit 534 comprises diodes D1, D2, D5 and D6, and the first full-bridge rectifier circuit 532 comprises diodes D3, D4, D7 and D8. The second full-bridge rectifier 524 is connected to the undotted terminal of the secondary winding portion N3 and the dotted terminal of the secondary winding portion N6. The first full-bridge rectifier circuit 532 is connected to the dotted terminal of the secondary winding portion N3 and the undotted terminal of the secondary winding portion N6.

The undotted terminal of the secondary winding portion N3 is connected to one terminal of the transformer equivalent leakage inductor L1', while the other terminal of the transformer equivalent leakage inductor L1' is connected to the anode of the diode D1 and the cathode of the diode D5. The dotted terminal of the secondary winding portion N3 is connected to one terminal of the transformer equivalent leakage inductor L1, while the other terminal of the transformer equivalent leakage inductor L1 is connected to the anode of the diode D3, the cathode of the diode D7 and the other terminal of the secondary winding portion N4. The dotted terminal of the secondary winding portion N4 and the undotted terminal of the secondary winding portion N5 are grounded. The dotted terminal of the secondary winding portion N5 is connected to the anode of the diode D4, the cathode of the diode D8 and the undotted terminal of the secondary winding portion N6. The dotted terminal of the secondary winding portion N6 is connected to the anode of the diode D2 and the cathode of the diode D6.

The cathode of the diode D1 is connected to the cathode of the diode D2 and one terminal of the switch K1 (other circuits that can achieve the function of the switch K1 may be substituted for the switch K1). The other terminal of the switch K1 is connected to the negative terminals of the diodes D3 and D4, one terminal of the resonant capacitor C3 and one terminal of the inductor L2. The other terminal of the inductor L2 is connected to the positive terminal of the output capacitor Co1.The negative terminal of the output capacitor Co1 is grounded.

The anode of the diode D5 is connected to the anode of the diode D6 and one terminal of the switch K2 (other circuits that can achieve the function of the switch K2 may be substituted for the switch K2). The other terminal of the switch K2 is connected to the positive terminals of the diodes D7 and D8, the other terminal of the resonant capacitor C3 and one terminal of the inductor L3. The other terminal of the inductor L3 is connected to the negative terminal of the output capacitor Co2. The positive terminal of the output capacitor Co2 is grounded.

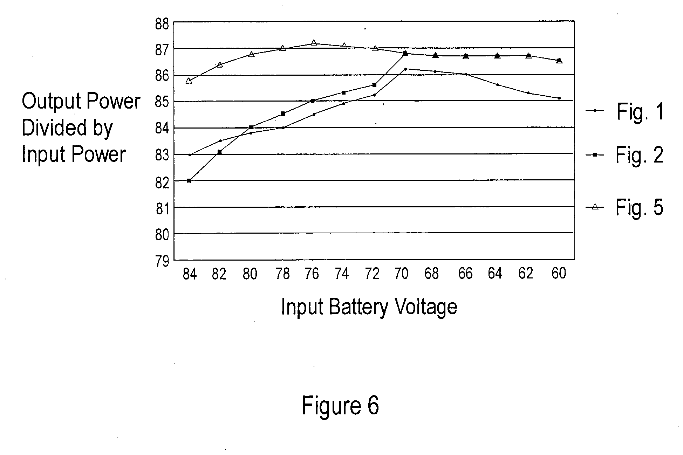

By controlling the switches K1 and K2, the integrated resonant push-pull converter as shown by Fig. 6 can maintain the resonant mode operation over a larger range of input voltages. When both K1 and K2 are open, only the secondary winding portions N4 and N5 are used. When K1 and K2 are closed, all of the secondary winding portions N3, N4, N5 and N6 are used. Therefore, desirable efficiency can be maintained over a range of input voltages.

When the battery has a relatively high voltage, the first switch K1 and the second switch K2 may be opened, thus using only the secondary winding portions N4 and N5. The resonant capacitor C3 resonates with the leakage inductor L1 and the switches Q1 and Q2 enter the resonant mode. When voltage of the battery falls to a predetermined value as a result of discharging, the first switch K1 and the second switch K2 are both closed, such that all of the secondary winding portions N3, N4, N5 and N6 are used. The turns ratio of transformer applied to the rectifier circuits 532, 534 changes so as to maintain value of the output voltage, the resonant capacitor C3 resonates with the leakage inductor L1' and the switches Q1 and Q2 operate in the resonant mode. As a result, the switching of the switches Q1 and Q2 is maintained in a resonant state over battery discharging process so as to improve the overall discharging efficiency.

Fig. 6 is a graph comparing efficiency of the converters of Fig. 1, Fig. 2 and Fig. 5 under different input voltages. The X-axis in Fig. 4 represents the input battery voltage, decreasing from about 80 volts to about 60 volts from left to right. The Y-axis represents efficiency expressed as a percentage. The triangle point line represents the efficiency of the circuit of Fig. 5, the rhombohedral point line represents the efficiency of the circuit of Fig. 1 and the rectangular point line represents the efficiency of the circuit of Fig. 2.

As shown by Fig. 6, when the input battery voltage is between about 84 volts and about 70 volts, the efficiency of the circuits shown in Fig. 1 and Fig. 2 increases as the input battery voltage decreases. When the input battery voltage is between about 70 volts and about 60 volts, the efficiency of the circuit of Fig. 1 decreases as the input battery voltage decreases. When the input battery voltage is between about 68 volts and about 62 volts, the efficiency is substantially the same, with the efficiency at an input battery voltage of about 70 volts being greater than the efficiency when the input battery voltage is about 60 volts. When the input battery voltage is between about 84 volts and about 76 volts, the efficiency of the circuit of Fig. 5 increases as the input battery voltage decreases. When the input battery voltage is between about 76 volts and about 70 volts, the efficiency of the circuit as shown by Fig. 5 decrease as the input battery voltage decreases. When the input battery voltage is between about 70 volts and about 60 volts, the efficiency of the circuit of Fig. 5 is about the same as that for the circuit of Fig. 2.

The efficiency of the prior art circuits of Fig. 1 and Fig. 2 is maximized when the input battery voltage is about 70 volts. The efficiency for the circuit of Fig. 5 is maximized when the input battery voltage is about 76 volts. The efficiency for all three circuits is minimized when the input battery voltage is about 84 volts. When the input battery voltage is between about 84 volts and about 82 volts, the efficiency of the circuit of Fig. 1 is greater than that of the circuit of Fig. 2, whereas elsewhere the efficiency of the circuit of Fig. 1 is less than that of the circuit of Fig. 2.

When the input battery voltage is between about 70 volts and about 60 volts, the efficiency for the circuit of Fig. 5 is about the same as that of the circuit of Fig. 2. When the input battery voltage is between about 84 volts and about 70 volts, the efficiency of the circuit of Fig. 5 is greater than that of the circuits of Fig. 1 and Fig. 2. Therefore, for the illustrated voltage range, the efficiency of the quasi-resonant push-pull converter of Fig. 5 is generally equal to or greater than that of the prior art push-pull converters of Fig. 1 and Fig. 2. It can be seen from Fig. 6 that efficiency of a push-pull resonant circuit according to some embodiments of the inventive subject matter may not become undesirably low due to high or low input voltage and relatively high efficiency is maintained over a range of input voltages.

In the the figures 3-6 and specification, there have been disclosed exemplary embodiments of the inventive subject matter. Although specific terms are employed, they are used in a generic and descriptive sense only and not for purposes of limitation, the scope of the inventive subject matter being defined by the following claims.

## Claims

1. A quasi-resonant push-pull converter comprising:
a transformer (520) having a primary winding (N1, N2) and a secondary winding (N3, N4, N5, and N6) having a first, second, third and fourth terminal
an input circuit (510) configured to apply a DC power source to the primary winding (N1, N2) of the transformer (520);
a resonant circuit (550);
a first rectifier circuit (532) having an input coupled to the first and second terminals of the secondary winding (N3, N4, N5, and N6) and an output coupled to an input of the resonant circuit (550); and
a second rectifier circuit (534) having an input coupled to the third and fourth terminals of the secondary winding (N3, N4, N5, and N6); and
a switching circuit (540) configured to couple and decouple an output of the second rectifier circuit (534) to and from the output of the first rectifier circuit (532) responsive to a voltage of the DC power source.

2. The converter of claim 1, wherein the switching circuit (540) is configured to change a turns ratio of the transformer (520) applied to the rectifier circuit (532, 534).

3. The converter of claim 1, wherein the switching circuit (540) comprises first and second switches (K1, K2) configured to couple and decouple the output of second rectifier circuit (534) to and from the output of the first rectifier circuit (532).

4. The converter of claim 1, wherein the first and second rectifier circuits (532, 534) are full-bridge rectifier circuits.

5. A method of operating a quasi-resonant push-pull converter comprising an input circuit (510) configured to apply a DC power source to a primary winding (N1, N2) of a transformer (520) having a primary winding (N1, N2) and a secondary winding (N3, N4, N5, N6) having a first, second, third and fourth terminal, a first rectifier circuit (532) having an input coupled to the first and second terminals of the secondary winding (N3, N4, N5, and N6) and an output coupled to an input of the resonant circuit (550), and a second rectifier circuit (534) having an input coupled to the third and fourth terminals of the secondary winding (N3, N4, N5, and N6);, the method comprising:
selectively modifying a coupling and decoupling an output of second rectifier circuit (534) to and from the output of the first rectifier circuit (532) responsive to a voltage of the DC power source to control an efficiency of the converter.

6. The method of claim 5, wherein selectively modifying a coupling of the rectifier circuit (532, 534) responsive to a voltage of the DC power source to control an efficiency of the converter comprises changing a turns ratio of the transformer (520) applied to rectifier circuit (532, 534).

7. The method of claim 6, wherein the rectifier circuit (532, 534) comprises a first rectifier circuit (532) having an input coupled to first and second terminals of the secondary winding (N3, N4, N5, and N6) and an output coupled to an input of the filter circuit and a second rectifier circuit (534) having an input coupled to third and fourth terminals of the secondary winding (N3, N4, N5, and N6) and wherein selectively modifying a coupling of the rectifier circuit responsive to a voltage of the DC power source to control an efficiency of the converter comprises coupling and decoupling an output of the second rectifier circuit (534) to and from the output of the first rectifier circuit (532) responsive to the voltage of the DC power source.

8. The method of claim 7, wherein the first rectifier circuit (532) and the second rectifier circuit (534) are full-bridge rectifier circuits.

9. The method of claim 5, wherein selectively modifying a coupling of the rectifier circuit (534) responsive to a voltage of the DC power source to control an efficiency of the converter comprises selectively modifying a coupling of the rectifier circuit (534) responsive to a voltage of the DC power source to maintain resonant mode operation of a switching device of the input circuit (510) as the voltage of the DC source changes.

## Patentansprüche

1. Quasiresonanter Gegentaktwandler, umfassend:
einen Transformator (520), der eine Primärwicklung (N1, N2) und eine Sekundärwicklung (N3, N4, N5 und N6) aufweist, die einen ersten, einen zweiten, einen dritten und einen vierten Anschluss aufweisen
eine Eingangsschaltung (510), die konfiguriert ist, um eine Gleichstromquelle an die Primärwicklung (N1, N2) des Transformators (520) anzulegen;
einen Resonanzkreis (550);
eine erste Gleichrichterschaltung (532), die einen Eingang, der mit dem ersten und dem zweiten Anschluss der Sekundärwicklung (N3, N4, N5 und N6) gekoppelt ist, und einen Ausgang aufweist, der mit einem Eingang der Resonanzschaltung (550) gekoppelt ist; und
eine zweite Gleichrichterschaltung (534), die einen Eingang aufweist, der mit dem dritten und dem vierten Anschluss der Sekundärwicklung (N3, N4, N5 und N6) gekoppelt ist; und
einen Schaltkreis (540), der konfiguriert ist, um als Reaktion auf eine Spannung der Gleichstromquelle einen Ausgang der zweiten Gleichrichterschaltung (534) mit dem Ausgang der ersten Gleichrichterschaltung (532) zu koppeln und von diesem zu entkoppeln.

2. Wandler nach Anspruch 1, wobei der Schaltkreis (540) konfiguriert ist, um ein Wicklungsverhältnis des Transformators (520) zu ändern, der an die Gleichrichterschaltung (532, 534) angelegt ist.

3. Wandler nach Anspruch 1, wobei der Schaltkreis (540) einen ersten und einen zweiten Schalter (K1, K2) umfasst, die konfiguriert sind, um den Ausgang der zweiten Gleichrichterschaltung (534) mit dem Ausgang der ersten Gleichrichterschaltung (532) zu koppeln und von diesem zu entkoppeln.

4. Wandler nach Anspruch 1, wobei die erste und die zweite Gleichrichterschaltung (532, 534) Vollbrückengleichrichterschaltungen sind.

5. Verfahren zum Betreiben eines quasiresonanten Gegentaktwandlers, der eine Eingangsschaltung (510), die konfiguriert ist, um eine Gleichstromquelle an eine Primärwicklung (N1, N2) eines Transformators (520) anzulegen, der eine Primärwicklung (N1, N2) und eine Sekundärwicklung (N3, N4, N5, N6) aufweist, die einen ersten, einen zweiten, einen dritten und einen vierten Anschluss aufweisen, eine erste Gleichrichterschaltung (532), die einen Eingang, der mit dem ersten und dem zweiten Anschluss der Sekundärwicklung (N3, N4, N5 und N6) gekoppelt ist, und einen Ausgang aufweist, der mit einem Eingang des Resonanzkreises (550) gekoppelt ist, und eine zweite Gleichrichterschaltung (534) umfasst, die einen Eingang aufweist, der mit dem dritten und dem vierten Anschluss der Sekundärwicklung (N3, N4, N5 und N6) gekoppelt ist;, wobei das Verfahren umfasst:
selektives Modifizieren einer Kopplung eines Ausgangs der zweiten Gleichrichterschaltung (534) mit dem Ausgang der ersten Gleichrichterschaltung (532) und einer Entkopplung von diesem als Reaktion auf eine Spannung der Gleichstromquelle, um einen Wirkungsgrad des Wandlers zu steuern.

6. Verfahren nach Anspruch 5, wobei das selektive Modifizieren einer Kopplung der Gleichrichterschaltung (532, 534) als Reaktion auf eine Spannung der Gleichstromquelle, um einen Wirkungsgrad des Wandlers zu steuern, das Ändern eines Wicklungsverhältnisses des Transformators (520) umfasst, der an die Gleichrichterschaltung (532, 534) angelegt wird.

7. Verfahren nach Anspruch 6, wobei die Gleichrichterschaltung (532, 534) eine erste Gleichrichterschaltung (532), die einen Eingang, der mit einem ersten und einem zweiten Anschluss der Sekundärwicklung (N3, N4, N5 und N6) gekoppelt ist, und einen Ausgang aufweist, der mit einem Eingang der Filterschaltung gekoppelt ist, und eine zweite Gleichrichterschaltung (534) umfasst, die einen Eingang aufweist, der mit einem dritten und einem vierten Anschluss der Sekundärwicklung (N3, N4, N5 und N6) gekoppelt ist, und wobei das selektive Modifizieren einer Kopplung der Gleichrichterschaltung als Reaktion auf eine Spannung der Gleichstromquelle, um einen Wirkungsgrad des Wandlers zu steuern, das Koppeln eines Ausgangs der zweiten Gleichrichterschaltung (534) mit dem Ausgang der ersten Gleichrichterschaltung (532) und das Entkoppeln von diesem als Reaktion auf die Spannung der Gleichstromquelle umfasst.

8. Verfahren nach Anspruch 7, wobei die erste Gleichrichterschaltung (532) und die zweite Gleichrichterschaltung (534) Vollbrückengleichrichterschaltungen sind.

9. Verfahren nach Anspruch 5, wobei das selektive Modifizieren einer Kopplung der Gleichrichterschaltung (534) als Reaktion auf eine Spannung der Gleichstromquelle, um einen Wirkungsgrad des Wandlers zu steuern, das selektive Modifizieren einer Kopplung der Gleichrichterschaltung (534) als Reaktion auf eine Spannung der Gleichstromquelle umfasst, um einen Resonanzmodusbetrieb einer Schaltvorrichtung der Eingangsschaltung (510) aufrechtzuerhalten, wenn sich die Spannung der Gleichstromquelle ändert.

## Revendications

1. Convertisseur push-pull quasi-résonant comprenant :
un transformateur (520) ayant un enroulement primaire (N1, N2) et un enroulement secondaire (N3, N4, N5, et N6) ayant une première, deuxième, troisième et quatrième borne
un circuit d'entrée (510) configuré pour appliquer une source d'alimentation CC à l'enroulement primaire (N1, N2) du transformateur (520) ;
un circuit résonant (550) ;
un premier circuit redresseur (532) ayant une entrée couplée aux première et deuxième bornes de l'enroulement secondaire (N3, N4, N5, et N6) et une sortie couplée à une entrée du circuit résonant (550) ; et
un deuxième circuit redresseur (534) ayant une entrée couplée aux troisième et quatrième bornes de l'enroulement secondaire (N3, N4, N5, et N6) ; et
un circuit de commutation (540) configuré pour coupler et découpler une sortie du deuxième circuit redresseur (534) vers et depuis la sortie du premier circuit redresseur (532) en réponse à une tension de la source d'alimentation CC.

2. Convertisseur selon la revendication 1, dans lequel le circuit de commutation (540) est configuré pour changer un rapport de transformation du transformateur (520) appliqué au circuit redresseur (532, 534).

3. Convertisseur selon la revendication 1, dans lequel le circuit de commutation (540) comprend des premier et deuxième commutateurs (K1, K2) configurés pour coupler et découpler la sortie de deuxième circuit redresseur (534) vers et depuis la sortie du premier circuit redresseur (532).

4. Convertisseur selon la revendication 1, dans lequel les premier et deuxième circuits redresseurs (532, 534) sont des circuits redresseurs à pont complet.

5. Procédé de fonctionnement d'un convertisseur push-pull quasi-résonant comprenant un circuit d'entrée (510) configuré pour appliquer une source d'alimentation CC à un enroulement primaire (N1, N2) d'un transformateur (520) ayant un enroulement primaire (N1, N2) et un enroulement secondaire (N3, N4, N5, N6) ayant une première, deuxième, troisième et quatrième borne, un premier circuit redresseur (532) ayant une entrée couplée aux première et deuxième bornes de l'enroulement secondaire (N3, N4, N5, et N6) et une sortie couplée à une entrée du circuit résonant (550), et un deuxième circuit redresseur (534) ayant une entrée couplée aux troisième et quatrième bornes de l'enroulement secondaire (N3, N4, N5, et N6) ;, le procédé comprenant :
la modification de manière sélective d'un couplage et découplage d'une sortie de deuxième circuit redresseur (534) vers et depuis la sortie du premier circuit redresseur (532) en réponse à une tension de la source d'alimentation CC pour contrôler un rendement du convertisseur.

6. Procédé selon la revendication 5, dans lequel la modification de manière sélective d'un couplage du circuit redresseur (532, 534) en réponse à une tension de la source d'alimentation CC pour contrôler un rendement du convertisseur comprend le changement d'un rapport de transformation du transformateur (520) appliqué au circuit redresseur (532, 534).

7. Procédé selon la revendication 6, dans lequel le circuit redresseur (532, 534) comprend un premier circuit redresseur (532) ayant une entrée couplée aux première et deuxième bornes de l'enroulement secondaire (N3, N4, N5, et N6) et une sortie couplée à une entrée du circuit de filtre et un deuxième circuit redresseur (534) ayant une entrée couplée aux troisième et quatrième bornes de l'enroulement secondaire (N3, N4, N5, et N6) et dans lequel la modification de manière sélective d'un couplage du circuit redresseur en réponse à une tension de la source d'alimentation CC pour contrôler un rendement du convertisseur comprend le couplage et le découplage d'une sortie du deuxième circuit redresseur (534) vers et depuis la sortie du premier circuit redresseur (532) en réponse à la tension de la source d'alimentation CC.

8. Procédé selon la revendication 7, dans lequel le premier circuit redresseur (532) et le deuxième circuit redresseur (534) sont des circuits redresseurs à pont complet.

9. Procédé selon la revendication 5, dans lequel la modification de manière sélective d'un couplage du circuit redresseur (534) en réponse à une tension de la source d'alimentation CC pour contrôler un rendement du convertisseur comprend la modification de manière sélective d'un couplage du circuit redresseur (534) en réponse à une tension de la source d'alimentation CC pour maintenir un fonctionnement en mode résonant d'un dispositif de commutation du circuit d'entrée (510) lorsque la tension de la source CC change.
